# EUROPÄISCHE PATENTSCHRIFT

(11) **EP 4 536 535 B1**
(45) Veröffentlichungstag und Bekanntmachung des Hinweises auf die Patenterteilung: **09.12.2026**
(21) Anmeldenummer: 23729309.7
(22) Anmeldetag: 16.05.2023
(51) Int. Cl.: B62D 15/02

(54) **VERFAHREN ZUM BEWERTEN VON BEWEGUNGEN EINES FAHRZEUGS, VERFAHREN ZUM BETREIBEN EINES FAHRZEUGFÜHRUNGSSYSTEMS, ELEKTRONISCHES FAHRZEUGFÜHRUNGSSYSTEM SOWIE EIN FAHRZEUG MIT EINEM ELEKTRONISCHEN FAHRZEUGFÜHRUNGSSYSTEM**
METHOD FOR EVALUATING MOVEMENTS OF A VEHICLE, METHOD FOR OPERATING A VEHICLE-GUIDANCE SYSTEM, ELECTRONIC VEHICLE-GUIDANCE SYSTEM, AND A VEHICLE HAVING AN ELECTRONIC VEHICLE-GUIDANCE SYSTEM
PROCÉDÉ D'ÉVALUATION DE DEPLACEMENTS D'UN VÉHICULE, PROCÉDÉ DE FONCTIONNEMENT D'UN SYSTÈME DE GUIDAGE DE VÉHICULE, SYSTÈME DE GUIDAGE DE VÉHICULE ÉLECTRONIQUE ET VÉHICULE ÉQUIPÉ D'UN SYSTÈME DE GUIDAGE DE VÉHICULE ÉLECTRONIQUE

(30) Priorität: 07.06.2022 DE 102022205770
(43) Veröffentlichungstag der Anmeldung: 16.04.2025
(73) Patentinhaber: VOLKSWAGEN AKTIENGESELLSCHAFT, 38440 Wolfsburg (DE)
(72) Erfinder: HÜGER, Philipp, 38471 Rühen (DE); RADIMIRSCH, Markus, 31311 Uetze (DE); JÖRDENS, Christian, 38126 Braunschweig (DE)
(86) Internationale Anmeldenummer: PCT/EP2023/063159
(87) Internationale Veröffentlichungsnummer: WO 2023/237304

(56) Entgegenhaltungen:
- WO-A1-2021/090610
- WO-A1-2021/090610
- CN-A- 112 172 820
- CN-A- 112 172 820
- DE-A1- 102020 206 942
- DE-A1- 102020 206 942
- US-A1- 2013 035 821
- US-A1- 2013 035 821
- US-A1- 2022 080 970
- US-A1- 2022 080 970

## Beschreibung

Die Erfindung betrifft ein Verfahren zum Bewerten von Bewegungen eines Fahrzeugs.

Des Weiteren betrifft die Erfindung ein Verfahren zum Betreiben eines Fahrzeugführungssystems eines Fahrzeugs.

Ebenfalls betrifft die Erfindung ein elektronisches Fahrzeugführungssystem mit einer Auswerteeinheit sowie ein Fahrzeug mit einem entsprechenden Fahrzeugführungssystem.

Beispielsweise weisen Fahrzeuge, wie Personenkraftwagen oder Lastkraftwagen, eine Vielzahl von Fahrerassistenzsystemen zur Unterstützung eines Nutzers des Fahrzeugs beziehungsweise des Fahrzeugführers auf. Hierbei gibt es beispielsweise bereits Einparkhilfssysteme, welche dem Fahrer beim Einparken beispielsweise in eine Parklücke assistieren. Ebenfalls gibt es hierzu Assistenzsysteme, mit welchen der Fahrer ebenso beim nachfolgenden Ausparken unterstützt beziehungsweise diesem assistiert werden kann.

Beispielsweise offenbart die US 2016/0229451 A1 ein Assistenzsystem für ein Fahrzeug-Anhänger-Gespann, welches einen Fahrer bei einem Rückwärtsfahren mit dem Fahrzeug-Anhänger-Gespann unterstützen beziehungsweise diesem assistieren kann. Dabei kann insbesondere der Knickwinkel des Anhängers in Bezug zum Fahrzeug überwacht und beispielsweise begrenzt werden.

Beispielsweise offenbart die US 2022 / 0 080 970 A1 ein Verfahren zum Betreiben eines Rückfahrassistenzsystems für ein Fahrzeug, wobei das Rückfahrassistenzsystem eine Rückwärtsfahrt entlang einer zuvor gefahrenen Trajektorie ermöglicht, wobei anhand eines erwarteten Fehlers für die Rückwärtsfahrt entlang der zuvor gefahrenen Trajektorie, bei dem der erwartete Fehler einen vordefinierten Fehlerschwellenwert überschreitet, eine maximale Distanz für die Rückwärtsfahrt entlang der zuvor gefahrenen Trajektorie mittels einer Steuereinheit ermittelt und ausgegeben wird.

Die DE 10 2020 206 942 A1, auf dem der Oberbegriff von Anspruch 1 basiert, offenbart ein Verfahren zum Unterstützen eines Fahrers eines Fahrzeugs, das eine Lernphase umfasst, in der beispielsweise nach Aktivierung der Lernphase durch den Fahrer, ein Fahrmanöver vom Fahrer ausgeführt wird, bei dem das Fahrzeug manuell von einer ersten Startposition entlang einer ersten Trajektorie in eine Zielposition verbracht wird.

Beispielsweise offenbart die CN 112 172 820 A ein Verfahren, ein System und eine Vorrichtung zum autonomen Rückwärtsfahren eines Fahrzeugs auf engem Raum.

Beispielsweise offenbart die US 2013 / 0 035 821 A1 eine Fahrassistenzvorrichtung für ein Kraftfahrzeug zur Unterstützung beim Fahren auf schmalen Straßen. Die Vorrichtung umfasst eine Datenerfassungseinheit zum Erfassen von Streckendaten der Route, die von Rad- und Lenkwinkelsensoren gewonnen werden sollen, eine Trajektorienspeichereinheit zum Aufzeichnen der Streckendaten der Datenerfassungseinheit und eine Auslöseeinheit zum Auslösen des Kraftfahrzeugs auf Grundlage der von der Trajektorienspeichereinheit aufgezeichneten Streckendaten.

Eine Aufgabe der vorliegenden Erfindung besteht darin, ein Fahrzeugführungssystem, insbesondere ein Reversing-Assist-System, dahingehend zu verbessern, dass ein autonomer Rangiervorgang effizienter durchgeführt werden kann.

Diese Aufgabe wird durch ein Verfahren, ein elektronisches Fahrzeugführungssystem und ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Bewerten von Bewegungen eines Fahrzeugs wobei folgende Schritte durchgeführt werden
- Bewegen des Fahrzeugs entlang einer Trajektorie bei einem Rangiervorgang des Fahrzeugs, wobei die Trajektorie durch manuelles Betätigen eines Lenkelements des Fahrzeugs durch einen Nutzer durchfahren wird;
- Erfassen von Stellungen des Lenkelements beim Durchfahren der Trajektorie;
- Vergleichen der Stellungen mit zumindest einer vorgegebenen Referenz-Stellung des Lenkelements und Bestimmen zumindest eines Übersteigungs-Ergebnisses mit einer Auswerteeinheit, bei welchem eine Stellung größer oder gleich der Referenz-Stellung ist;
- Bestimmen eines Beurteilungsergebnisses mit der Auswerteeinheit zumindest abhängig von dem zumindest einen Übersteigungs-Ergebnis, wobei mit dem Beurteilungsergebnis eine potentielle Möglichkeit eines autonomen Durchfahrens zumindest eines Trajektorien-Abschnitts der Trajektorie in einer zur Rangierrichtung inversen Rangierrichtung beurteilt wird;
- Bereitstellen des Beurteilungsergebnisses an ein Fahrzeugführungssystem des Fahrzeugs.

Durch das vorgeschlagene Verfahren kann beispielsweise ein elektronisches Fahrzeugführungssystem zum Unterstützen eines Fahrers eines Fahrzeugs verbessert werden. Dies kann durch das bereitgestellte Beurteilungsergebnis realisiert beziehungsweise erreicht werden. Durch das Beurteilungsergebnis, bei welchem das zumindest eine Übersteigungs-Ergebnis berücksichtigt wurde, kann verhindert werden, dass es bei Überschreitung einer Regelgrenze für das Fahrzeugführungssystem zu einem gefährlichen autonomen Fahrmanöver kommt. Sollte beispielsweise bei der Bestimmung beziehungsweise Erzeugung des Beurteilungsergebnisses festgestellt werden, dass ein autonomes Durchfahren zumindest des Trajektorien-Abschnitts in der zur Rangierrichtung inversen Rangierrichtung durch das Fahrzeugführungssystem nicht gefahrlos durchgeführt werden kann, so kann dies durch das Fahrzeugführungssystem berücksichtigt werden. Dementsprechend kann hierüber der Fahrer beziehungsweise Nutzer des Fahrzeugs dahingehend in Kenntnis gesetzt werden, dass ein autonomes Durchfahren aktuell beziehungsweise temporär nicht möglich ist. Somit kann in besonderer Art und Weise verhindert werden, dass es zu einem autonomen Durchfahren des zumindest einen Trajektorien-Abschnitts kommt und so beispielsweise andere Verkehrsteilnehmer in der Umgebung gefährdet werden. Beispielsweise kann dadurch verhindert werden, dass bei einem Durchfahren der Trajektorie manuell durch den Nutzer bereits Stellungen des Lenkelements beziehungsweise eines Lenkrads eingestellt beziehungsweise verwendet wurden, welche eine systemseitige Grenze des Fahrzeugführungssystems darstellen. Somit wird insbesondere bei der Beurteilung beziehungsweise bei der Bestimmung des Beurteilungsergebnisses darauf geachtet, dass Zustände während des manuellen Durchfahrens der Trajektorie nicht die Regelgrenze des Fahrzeugführungssystems überschreiten. Sollten beispielsweise bei dem manuellen Durchfahren bereits grenzwertige Stellungen des Lenkelements vorgenommen worden sein, so kann es der Fall sein, dass diese bei dem autonomen Durchfahren durch das Fahrzeugführungssystem aus Gründen einer Regelgüte, eines systemseitigen Grenzbereichs oder aufgrund anderweitiger elektronischer beziehungsweise digitaler Gründe nicht erreicht werden können. Dies kann mit dem Beurteilungsergebnis beispielsweise bereitgestellt werden.

Somit kann mit Hilfe des vorgeschlagenen Verfahrens und insbesondere mit dem Beurteilungsergebnis systemseitig festgelegt werden, ob ein autonomes Durchfahren zumindest des Trajektorien-Abschnitts der Trajektorie durchgeführt werden kann oder nicht.

Beispielsweise kann das Beurteilungsergebnis für ein maschinelles Trainieren des Fahrzeugführungssystems bezüglich einer potenziellen Möglichkeit eines autonomen Durchfahrens einer speziellen Trajektorie durchgeführt werden.

Beispielsweise handelt es sich bei dem Fahrzeugführungssystem um ein elektronisches Assistenzsystem des Fahrzeugs. Speziell handelt es sich bei dem Fahrzeugführungssystem um einen "Reversing-Assistant" beziehungsweise um ein Reversing-Assistant-System. Bei einem solchen Reversing-Assistant-System fährt zunächst der Fahrer des Fahrzeugs beispielsweise bei einer Vorwärtsfahrt eine Trajektorie ab, die er danach assistiert rückwärts wieder durch das System abfahren kann. Hierbei kann der Fahrer beziehungsweise der Benutzer bei einer Vorwärtsfahrt bis in den mechanischen Endanschlag hinsichtlich der Lenkung des Fahrzeugs lenken. Dabei ist die Herausforderung, dass bei der Regelung entlang der Trajektorie der mechanische Endanschlag des Lenkelements eine Regelgrenze für das elektronische Fahrzeugführungssystem darstellt, über die hinaus keine Korrekturen möglich sind. Hier entsteht eine technische Grenze für die Regelgüte, weil die vorher durch den Fahrer angelernten Lenkbewegungen nicht oder nur teilweise bei anschließender Rückwärtsfahrt durch das System korrigiert werden können, wenn das Fahrzeug nicht genau auf der vorher vorwärtsgefahrenen Trajektorie fährt. Dadurch ergibt sich eine Abweichung bei einer Rückwärtsfahrt von der vorher antrainierten Trajektorie. Hierbei kann es beispielsweise zu Kollisionen mit Objekten kommen. Dies kann durch das vorgeschlagene Verfahren verbessert und insbesondere optimiert werden. Somit können hier diesbezügliche Nachteile durch das vorgeschlagene Verfahren gelöst werden.

Insbesondere erfolgt das Bewegen des Fahrzeugs entlang der Trajektorie beziehungsweise eines Streckenabschnitts beziehungsweise einer Route beziehungsweise einer Fahrstrecke manuell durch den Nutzer beziehungsweise Fahrer des Fahrzeugs. Bei der Trajektorie kann es sich also um einen Bewegungspfad während des Durchfahrens beziehungsweise während des Rangiervorgangs handeln. Bei dem Rangiervorgang kann es sich beispielsweise um einen Parkvorgang, Einparkvorgang, Ausparkvorgang, Durchfahren einer Engstelle oder um ein langsames Fahren handeln. Insbesondere erfolgt der Rangiervorgang mit einer Geschwindigkeit von maximal 10 km/h, insbesondere 15 km/h, speziell maximal 30 km/h. Insbesondere kann der Rangiervorgang mit Schrittgeschwindigkeit erfolgen.

Bei dem Lenkelement des Fahrzeugs handelt es sich beispielsweise um ein Lenkrad beziehungsweise eine Lenkhandhabe. Somit kann der Nutzer mit Hilfe des Lenkelements das Fahrzeug lenken beziehungsweise steuern. Während des Durchfahrens der Trajektorie können die Stellungen des Lenkelements, insbesondere kontinuierlich beziehungsweise permanent, erfasst beziehungsweise aufgezeichnet werden. Dies kann beispielsweise durch eine Erfassungseinheit des Fahrzeugs beziehungsweise des Fahrzeugführungssystems erfolgen. Beispielsweise kann es sich bei den Stellungen des Lenkelements um verschiedene Einschlagwinkel, Lenkwinkel oder Lenkeinschläge handeln. Insbesondere handelt es sich bei den Stellungen des Lenkelements um eine jeweilige Lenkradstellung.

Mit Hilfe der Auswerteeinheit, welche beispielsweise als elektronische Auswerteeinheit ausgebildet ist, können die Stellungen mit zumindest einer vorgegebenen Referenz-Stellung verglichen beziehungsweise analysiert beziehungsweise bewertet werden. Die vorgegebene Referenz-Stellung beziehungsweise eine Referenz-Information kann im Vorfeld durch systemseitig der Auswerteeinheit zur Verfügung gestellt werden. Dabei kann mit Hilfe der vorgegebenen Referenz-Stellung eine systemseitige Regelgrenze beziehungsweise technische Grenze beziehungsweise Regelgüte des Fahrzeugführungssystems berücksichtigt werden. Dabei wird insbesondere überprüft beziehungsweise festgelegt, welche kritischen Stellungen beziehungsweise kritischen Werte eine Stellung maximal aufweisen sollte. Sollte die Stellung dies überschreiten beziehungsweise übertreffen, so liegt ein Übersteigungs-Ergebnis vor. Unter dem Übersteigungs-Ergebnis ist zu verstehen, dass eine Stellung des Lenkelements die vorgegebene Referenz-Stellung überschreitet und somit einen kritischen Zustand beziehungsweise eine kritische Stellung einnimmt. Dies würde wiederum für das Fahrzeugführungssystem Probleme beziehungsweise Gefahren für das autonome Durchfahren bedeuten. Im schlimmsten Fall würde das autonome Durchfahren mit Hilfe des Fahrzeugführungssystems nicht mehr zur Verfügung stehen. Beispielsweise kann es sich bei den Referenz-Stellungen um vorgegebene Einschlag-Schwellen beziehungsweise EinschlagWinkel bezüglich des Lenkelements handeln. Beispielsweise können mit Hilfe der Referenz-Stellung vorgegebene, insbesondere maximale, Lenkwinkel vorgegeben werden, welche aus systemseitigen Gründen bei dem manuellen Durchfahren der Trajektorie vorzugsweise durch den Nutzer mit Hilfe des Lenkelements nicht erreicht werden sollten. Sollte beispielsweise der Nutzer einen Lenkwinkel beziehungsweise einen Lenkradwinkel mit Hilfe des Lenkelements vornehmen, welcher die Referenz-Stellung übertrifft, so liegt hier ein Übersteigungs-Ergebnis vor. Dies kann insbesondere automatisch mit Hilfe der Auswerteeinheit festgestellt werden. Unter Berücksichtigung des Übersteigungs-Ergebnisses kann nun die Beurteilung vorgenommen werden, so dass in Abhängigkeit von einer Zeitdauer und/oder Information bezüglich des Übersteigungs-Ergebnisses festgelegt werden kann, ob eine potenzielle Möglichkeit für ein autonomes Durchfahren zumindest des Trajektorien-Abschnitts aus sicherheits- und systemseitigen Gründen durchgeführt werden kann oder nicht. Dies kann dem Fahrzeugführungssystem beispielsweise von der Auswerteeinheit über kommunikationstechnische Verbindungen bereitgestellt beziehungsweise übermittelt werden.

Bei dem Trajektorien-Abschnitt handelt es sich beispielsweise um einen Streckenabschnitt beziehungsweise einen Bewegungspfadabschnitt der Trajektorie. Sollte es sich beispielsweise bei der Rangierrichtung um eine Vorwärtseinparkrichtung in eine Parklücke handeln, so ist unter der inversen Rangierrichtung eine Rückwärtseinparkrichtung zu verstehen. Beispielsweise kann also in der Rangierrichtung ein manuelles Einparken des Nutzers in eine Parklücke durchgeführt werden. Bei einem möglichen autonomen Durchfahren in der inversen Rangierrichtung kann also ein autonomes Ausparken des geparkten Fahrzeugs erfolgen.

Insbesondere kann ein potenzielles autonomes Durchfahren des zumindest einen Trajektorien-Abschnitts zeitlich nachfolgend hinsichtlich des Durchfahrens der Trajektorie erfolgen. Somit erfolgt das autonome Durchfahren der Trajektorie in der zur Rangierrichtung inversen Rangierrichtung zeitlich nachfolgend beziehungsweise zeitlich später hinsichtlich des Rangiervorgangs.

Insbesondere kann das Vergleichen der Stellungen und vor allem das Bestimmen des Beurteilungsergebnisses kontinuierlich bereits während des Rangiervorgangs erfolgen. Ebenso denkbar ist, dass dies nach dem durchgeführten Rangiervorgang erfolgt. Bevorzugt ist jedoch, dass während des manuellen Durchfahrens der Trajektorie die Stellungen kontinuierlich erfasst und mit der Referenz-Stellung verglichen werden, so dass kontinuierlich und insbesondere während des Rangiervorgangs zu einem jeweiligen Zeitpunkt eine Beurteilung bei Auftreten eines Übersteigungs-Ergebnisses durchgeführt werden kann, so dass beispielsweise bereits während des manuellen Betätigens des Lenkelements der Nutzer Änderungen beziehungsweise Anpassungen seines Fahrverhaltens beziehungsweise seines Rangierverhaltens vornehmen kann.

In einem Ausführungsbeispiel ist vorgesehen, dass abhängig von dem bereitgestellten Beurteilungsergebnis zumindest ein Warnhinweis generiert wird, wobei der zumindest eine Warnhinweis in dem Fahrzeug akustisch, optisch und/oder haptisch ausgegeben wird. Dadurch kann beispielsweise während des Rangiervorgangs oder unmittelbar nach dem Rangiervorgang dem Nutzer mitgeteilt werden, dass beispielsweise ein autonomes Durchfahren durch das Fahrzeugführungssystem nicht möglich ist oder dass dieses zumindest nur eingeschränkt möglich ist. Beispielsweise kann mit Hilfe des Warnhinweises ausgegeben werden, dass beispielsweise eine Reversing-Funktion des Fahrzeugführungssystems nur teilweise oder eingeschränkt zur Verfügung steht. Im "worst case" kann dem Nutzer ein Warnhinweis ausgegeben werden, dass ein autonomes Durchfahren mit Hilfe des Fahrzeugführungssystems nicht möglich ist und somit nicht zur Verfügung steht.

Beispielsweise kann der zumindest eine Warnhinweis oder können mehrere Warnhinweise dem Nutzer über eine Ausgabeeinheit im Fahrzeug und/oder eine Ausgabeeinheit eines mobilen Endgeräts des Nutzers akustisch, optisch und/oder haptisch ausgegeben werden. Beispielsweise kann in Abhängigkeit von dem Warnhinweis eine haptische Rückmeldung bezüglich des Lenkelements dem Nutzer ausgegeben. Somit kann also der Nutzer durch eine Vibration des Lenkelements hinsichtlich des Beurteilungsergebnisses und somit bezüglich des Übersteigungs-Ergebnisses informiert werden.

In einem weiteren Ausführungsbeispiel ist vorgesehen, dass abhängig von einem Wert des Übersteigungs-Ergebnisses neben dem zumindest einen Warnhinweis weitere Warnhinweise generiert werden, wobei der zumindest eine Warnhinweis und die weiteren Warnhinweise in einer kaskadierten Reihenfolge im Fahrzeug ausgegeben werden. Beispielsweise können somit bereits bei der Feststellung, dass sich zumindest bei einem Übersteigungs-Ergebnis kritische und insbesondere systemkritische Zustände während des Rangiervorgangs ergeben, Vorwarnungen ausgegeben werden. Beispielsweise kann bei Feststellung, dass sich eine Stellung zumindest an die Referenz-Stellung annähert oder zumindest gleich ist, bereits eine Vorwarnung des Nutzers während des Durchfahrens der Trajektorie ausgegeben werden. Somit können hier bereits im Vorfeld beziehungsweise frühzeitig Gegenmaßnahmen beziehungsweise Gegenlenkmaßnahmen durchgeführt werden. Je nachdem, welches Maß das Übersteigungs-Ergebnis aufweist und insbesondere je nach Differenz zwischen den Stellungen und der Referenz-Stellung können kaskadierte Warnhinweise beziehungsweise Warnungen dem Nutzer ausgegeben werden. Somit können Gegenmaßnahmen frühzeitig durchgeführt werden, um ein potenzielles autonomes Durchfahren zu ermöglichen.

Dabei können insbesondere die Warnhinweise in einer vorgegebenen kaskadierten Reihenfolge ausgegeben werden, so dass zunächst eine leichtere beziehungsweise sanftere Warnung ausgegeben wird, bis zu einem späteren Zeitpunkt eine starke, insbesondere eine intensive Warnung dem Nutzer ausgegeben wird.

In einem Ausführungsbeispiel ist des Weiteren vorgesehen, dass dem Nutzer mit dem zumindest einen Warnhinweis eine Handlungsempfehlung ausgegeben wird, mit welcher dem Nutzer ein Anpassen beziehungsweise Korrigieren des manuellen Betätigens des Lenkelements vorgeschlagen wird. Hierbei kann ein Betätigen im Hinblick auf eine Veränderung der Stellung des Lenkelements kleiner oder gleich der Referenz-Stellung vorgeschlagen werden. Somit kann mit Hilfe der Handlungsempfehlung während des manuellen Durchfahrens der Trajektorie werden des Rangiervorgangs der Nutzer angeleitet werden, so dass ein autonomes Durchfahren später durch das Fahrzeugführungssystem durchgeführt werden kann. Mit Hilfe der Handlungsempfehlung kann also der Nutzer das manuelle Betätigen des Lenkelements und insbesondere das manuelle Fahren des Fahrzeugs während des Rangiervorgangs entlang der Trajektorie anpassen beziehungsweise adaptieren. Somit kann beispielsweise dem Nutzer akustisch signalisiert werden, dass beispielsweise ein Lenkwinkel beziehungsweise ein Einschlagwinkel des Lenkelements entsprechend zu korrigieren oder anzupassen sind, um eine Systemgrenze beziehungsweise Regelgrenze des Fahrzeugführungssystems für ein späteres autonomes, zumindest teilautonomes Durchfahren nicht zu beeinträchtigen beziehungsweise zu verhindern. Somit kann die Handlungsempfehlung bereits während des Durchfahrens des Rangiervorgangs ausgegeben werden. Vor allem kann dem Nutzer dabei ausgegeben beziehungsweise zur Verfügung gestellt werden, inwieweit er eine beispielsweise aktuelle, Stellung des Lenkelements verändern muss, so dass beispielsweise die Referenz-Stellung nicht erreicht beziehungsweise übertroffen wird. Somit kann beispielsweise dem Nutzer angegeben werden, dass er das Lenkelement weiter nach links oder weiter nach rechts lenken beziehungsweise drehen muss. Somit kann also der Lenkradwinkel vorgegeben werden, welcher von dem Nutzer manuell eingestellt beziehungsweise eingehalten werden sollte.

Beispielsweise kann hierbei dem Nutzer ein Bereich vorgegeben beziehungsweise bereitgestellt werden, innerhalb welchem er die Stellungen des Lenkelements einhalten sollte.

Insbesondere kann mit den Stellungen ein jeweiliges Betätigen des Lenkelements in mehrere Richtungen berücksichtigt werden. Insbesondere ist hierbei zu verstehen, dass beispielsweise das Lenkelement entweder nach links oder nach rechts gedreht werden kann. Somit kann unter einer Stellung eine linksseitige Maximalstellung und eine rechtsseitige Maximalstellung zu verstehen sein.

In einem Ausführungsbeispiel ist vorgesehen, dass abhängig von dem zumindest einen Übersteigungs-Ergebnis eine Lenkeigenschaft des Lenkelements für das manuelle Betätigen des Lenkelements angepasst wird, wodurch der Nutzer beim manuellen Betätigen des Lenkelements eine haptische Rückmeldung betreffend des zumindest einen Übersteigungs-Ergebnis erfährt. Beispielsweise kann hierbei vorgegeben werden, inwieweit der Nutzer das Lenkelement in den Bereich einer jeweiligen maximalen Stellung, also in einer linksseitigen oder in einer rechtsseitigen maximalen Stellung des Lenkrads, bewegen beziehungsweise betätigen kann. Somit kann insbesondere mit Hilfe der Lenkeigenschaft des Lenkelements beispielsweise ein Winkelbereich beziehungsweise ein Einschlagbereich festgelegt werden, mit welchem der Nutzer das Lenkelement betätigen beziehungsweise einstellen kann beziehungsweise darf. Sollte der Nutzer beim manuellen Betätigen des Lenkelements das Lenkelement in eine Stellung bringen, bei welcher ein Übersteigungs-Ergebnis vorliegen würde, so kann durch haptische Rückmeldung, also beispielsweise Vibration des Lenkelements beziehungsweise des Lenkrads, der Nutzer darüber informiert werden, dass er sich nun in einer kritischen Stellung beziehungsweise kritischen Betätigung des Lenkelements befindet. Somit kann der Nutzer hier während des Durchführens des Rangiervorgangs Eingriffe beziehungsweise Betätigungseingriffe in das Fahrverhalten des Fahrzeugs während des Rangiervorgangs ausüben.

Es ist es des Weiteren vorgesehen, dass die Referenz-Stellung abhängig von zumindest einer Systemeigenschaft des Fahrzeugführungssystems bestimmt beziehungsweise beeinflusst wird, wobei die Referenz-Stellung derart bestimmt wird, dass sie in einem Bereich zwischen einer mechanischen Grenz-Stellung des Lenkelements bezüglich eines manuellen Betätigens des Lenkelements und einer systemseitigen Grenz-Stellung bezüglich eines autonomen Betätigen des Lenkelements durch das Fahrzeugführungssystem liegt. Dadurch kann erreicht werden, dass beim Einhalten der Stellungen des Betätigungselements beim manuellen Durchfahren der Trajektorie hinsichtlich der Referenz-Stellung das Fahrzeugführungssystem ein autonomes Durchfahren durchführen kann. Dabei werden insbesondere Systemeigenschaften des Fahrzeugführungssystems, wie Regelverhalten, Regelgüte, Regelgrenzen, Rechenleistungen oder anderweitige elektronische beziehungsweise elektromechanische Eigenschaften berücksichtigt. Somit kann die Referenz-Stellung beispielsweise durch die Auswerteeinheit oder durch eine fahrzeugexterne Einrichtung bestimmt beziehungsweise erstellt beziehungsweise festgelegt werden. Dabei wird ein Bereich festgelegt, welcher zwischen der mechanischen Grenz-Stellung des Lenkelements bezüglich des manuellen Betätigens des Lenkelements und der systemseitigen Grenz-Stellung beziehungsweise einem autonomen Betätigen des Lenkelements durch das Fahrzeugführungssystem liegt. Hierbei kann es sich beispielsweise um einen Intervallbereich handeln. Bei der mechanischen Grenz-Stellung handelt es sich also um eine Grenze des Lenkelements, welche durch ein manuelles Betätigen erreicht werden kann. Bei der systemseitigen Grenz-Stellung handelt es sich wiederum um eine Stellung beziehungsweise um beispielsweise einen Lenkwinkel, welcher autonom durch das Fahrzeugführungssystem mit Hilfe des Lenkelements eingestellt werden kann. Durch den festgelegten Bereich kann also verhindert werden, dass eine Stellung vorliegt, welche durch das Fahrzeugführungssystem nicht realisiert beziehungsweise vorgenommen werden kann.

Es ist vorgesehen, dass eine jeweilige Differenz zwischen den erfassten Stellungen und der systemseitigen Grenz-Stellung ermittelt wird, wobei die jeweilige Differenz bei dem Bestimmen des Beurteilungsergebnisses berücksichtigt wird. Somit können die durch den Nutzer manuell betätigten beziehungsweise eingestellten Stellungen des Lenkelements mit der systemseitigen Grenz-Stellung des Lenkelements verglichen beziehungsweise beurteilt werden. Dabei kann eine Differenz, insbesondere eine Abweichung beziehungsweise ein Vergleichsergebnis, zwischen den erfassten Stellungen und des systemseitigen Grenz-Stellung ermittelt werden. Dies kann beispielsweise durch die Auswerteeinheit erfolgen. Sollte beispielsweise zumindest eine Stellung im Vergleich zu der systemseitigen Grenz-Stellung eine Differenz aufweisen, welche einen vorgegebenen Differenzgrenzwertbereich überschreitet, so kann bei der Bestimmung des Beurteilungsergebnisses festgelegt werden, dass beispielsweise ein autonomes Durchfahren nicht möglich ist. Insbesondere ist es dann kritisch, wenn eine jeweilige Differenz minimal ist. Insbesondere sollten die Stellungen hinsichtlich der Grenz-Stellung einen ausreichend großen Abstand beziehungsweise eine ausreichend große Differenz zueinander aufweisen. Sollten die erfassten Stellungen die System-Grenz-Stellungen übertreffen, also die Stellungen größer oder gleich der systemseitigen Grenz-Stellung sein, so ist dies für ein autonomes Durchfahren mit Hilfe des Fahrzeugführungssystems nicht dienlich, so dass dies insbesondere nicht möglich ist. Die ermittelten Differenzen können beispielsweise durch die Auswerteeinheit dem Fahrzeugführungssystem bereitgestellt werden. Die jeweiligen Differenzen können bereits ebenfalls für das Ausgeben der Warnhinweise berücksichtigt werden.

Es ist vorgesehen, dass dann, wenn die Differenz einen ersten vorgegebenen Schwellwert überschreitet, ein erster Sicherheitsmechanismus des Fahrzeugführungssystems, bei welchem ein autonomes Durchfahren des zumindest einen Trajektorien-Abschnitts der Trajektorie in der zur Rangierrichtung inversen Rangierrichtung eingeschränkt durchgeführt werden kann, aktiviert wird, und dann, wenn die Differenz einen zweiten vorgegebenen Schwellwert überschreitet, ein zweiter Sicherheitsmechanismus des Fahrzeugführungssystems, bei welchem ein autonomes Durchfahren des zumindest einen Trajektorien-Abschnitts der Trajektorie in der zur Rangierrichtung inversen Rangierrichtung nicht durchgeführt werden kann, aktiviert wird. Somit kann systemseitig das Fahrzeugführungssystem selbst, welches die ermittelten Differenzen von der Auswerteeinheit übermittelt bekommt, eigenständig und insbesondere automatisch festlegen, in welchem Umfang beispielsweise ein autonomes Durchfahren durchgeführt werden kann. Insbesondere können neben dem ersten und zweiten Sicherheitsmechanismus weitere Sicherheitsmechanismen vorgesehen sein. Je nachdem, welchen Schwellwert die Differenz überschreitet oder welchem Schwellwert sich die Differenz annähert, kann ein entsprechender Sicherheitsmechanismus aktiviert werden. Bei dem ersten Sicherheitsmechanismus kann zwar ein autonomes Durchfahren dem Nutzer beispielsweise angeboten werden, jedoch kann hier dem Nutzer klargemacht werden, dass dies unter einem vorgegebenen Sicherheitsrisiko durchgeführt wird. Insbesondere ist bei dem ersten Sicherheitsmechanismus das autonome Durchfahren nur teilweise, insbesondere nur eingeschränkt, möglich.

Des Weiteren kann beispielsweise ein weiterer Sicherheitsmechanismus vorgegeben werden, dass beispielsweise nur ein teilautonomes Durchfahren möglich ist und der Nutzer gewisse Fahraufgaben übernehmen muss. Somit kann beispielsweise in Abhängigkeit von der ermittelten Differenz durch das Fahrzeugführungssystem festgelegt werden, ob prinzipiell ein autonomes Durchfahren durch das Fahrzeugführungssystem durchgeführt werden kann oder ob beispielsweise nur ein teilautonomes Fahren beziehungsweise Durchfahren möglich ist. Ebenso denkbar ist, dass mit Hilfe des Fahrzeugführungssystems und je nachdem, welcher mögliche Sicherheitsmechanismus aktiviert wurde, nur ein Assistieren beziehungsweise Unterstützen des Nutzers möglich ist. Es kann also systemseitig zwischen einem autonomen Durchfahren und einem teilautonomen Durchfahren unterschieden werden. Der jeweils aktivierte Sicherheitsmechanismus kann dem Nutzer des Fahrzeugs akustisch und/oder optisch ausgegeben werden, so dass der Nutzer darüber informiert ist.

In einem weiteren Ausführungsbeispiel ist vorgesehen, dass dann, wenn zumindest eine der erfassten Stellungen der systemseitigen Grenz-Stellung entspricht oder diese übersteigt, das Erfassen der Stellungen des Lenkelements beim Durchfahren der Trajektorie und/oder ein Erfassen der Trajektorie beim Durchfahren der Trajektorie abgebrochen wird. Dadurch kann also bereits während des Durchfahrens der Trajektorie, also beim manuellen Durchfahren der Trajektorie, systemseitig entschieden werden, ob ein autonomes Durchfahren prinzipiell möglich ist. Sollte dies nicht der Fall sein, so werden beispielsweise aus Sicherheitsgründen keine Stellungen des Lenkelements und/oder die Trajektorie an sich erfasst, da diese Informationen für den aktuell durchgeführten Rangiervorgang nicht mehr von Relevanz sind, da der Nutzer den anschließenden inverser Rangiervorgang bezüglich des vorher durchgeführten manuellen Rangiervorgangs wiederum manuell durchführen muss, da das Fahrzeugführungssystem an seine systemseitigen Grenzen gestoßen ist und für ein autonomes Durchfahren, also zumindest für den einen nachfolgenden inversen Rangiervorgang, nicht zur Verfügung steht. Dies ist beispielsweise eine "Worst Case"-Sicherheitsmaßnahme des Fahrzeugführungssystems, so dass es zu keinen gefährlichen beziehungsweise verkehrskritischen autonomen Fahrten kommen kann. Somit ist ein autonomes Durchfahren des Fahrzeugführungssystems nur dann möglich, wenn systemseitig festgestellt wird, dass ein autonomes Durchfahren systemseitig gefahrlos vorgenommen werden kann.

Somit können bereits während des Durchfahrens der Trajektorie bei dem Rangiervorgang kontinuierlich die erfassten Stellungen mit der systemseitigen Grenz-Stellung verglichen beziehungsweise bewertet werden, und falls zumindest eine dieser Stellungen der systemseitigen Grenz-Stellung entspricht oder diese überschreitet, so wird das Erfassen der Stellungen und/oder Trajektorie abgebrochen. Insbesondere wird ab dem Zeitpunkt, bei welchem zumindest eine Stellung der systemseitigen Grenz-Stellung entspricht oder diese überschreitet, das Erfassen der Stellungen und/oder der Trajektorie beendet. Dies kann wiederum dem Nutzer akustisch und/oder optisch und/oder haptisch ausgegeben werden, so dass der Nutzer darüber in Kenntnis gesetzt wird, dass das Fahrzeugführungssystem für ein nachfolgendes autonomes Durchfahren der Trajektorie in inverser Rangierrichtung nicht zur Verfügung steht.

Dabei kann beispielsweise dem Nutzer akustisch und/oder optisch mitgeteilt werden, dass er für das manuelle Durchführen des Rangiervorgangs einen neuen Versuch starten soll. Somit kann der Nutzer beispielsweise das Fahrzeug zumindest wieder etwas zurücksetzen, also beispielsweise entgegen der Rangierrichtung fahren, so dass ein erneutes manuelles Durchfahren der Trajektorie gestartet werden kann und systemseitig zunächst wiederum die Funktionen zur Verfügung stehen. Dies kann beispielsweise so oft durchgeführt werden, bis systemseitig festgestellt werden kann, dass ein autonomes Durchfahren möglich ist.

In einem Ausführungsbeispiel ist vorgesehen, dass beim Durchfahren der Trajektorie eine Umgebung des Fahrzeugs, insbesondere permanent beziehungsweise kontinuierlich, mit zumindest einer Erfassungseinheit des Fahrzeugs erfasst wird, wobei zumindest eine Umgebungsinformation betreffend die erfasste Umgebung der Auswerteeinheit bereitgestellt wird, und die zumindest eine Umgebungsinformation beim Bestimmen des Beurteilungsergebnisses berücksichtigt wird. Somit kann die Beurteilung beziehungsweise das Bestimmen des Beurteilungsergebnisses effektiver beziehungsweise besser durchgeführt werden, da neben den eigentlichen Informationen bezüglich des Durchfahrens der Trajektorie auch weitere Umgebungsinformationen berücksichtigt werden können. Dabei können beispielsweise potenzielle Kollisionsobjekte, Straßenbegrenzungen, Straßenverläufe, Straßeneigenschaften, andere Verkehrsteilnehmer, Hindernisse oder weitere Informationen bezüglich eines Verkehrsgeschehens während des Rangiervorgangs berücksichtigt werden. Dabei können insbesondere beispielsweise bei einem Einparkvorgang als Rangiervorgang mit den Umgebungsinformationen Informationen bezüglich der Parklücke beziehungsweise des Parkplatzes berücksichtigt werden. Dabei kann beispielsweise eine Parkplatzausrichtung und/oder ein Parkplatzmaß zusätzlich bei der Bestimmung des Beurteilungsergebnisses berücksichtigt werden. Sollte hierbei beispielsweise anhand der Umgebungsinformationen systemseitig festgestellt werden, dass ebenfalls systemseitig Schwierigkeiten für das autonome Durchfahren eintreten können, so kann dies wiederum bei einem Beurteilen beziehungsweise Bestimmen des Beurteilungsergebnisses berücksichtigt werden und dem System und insbesondere dem Nutzer mitgeteilt werden. Insbesondere kann während des Durchfahrens der Trajektorie eine Rundumerfassung der Umgebung des Fahrzeugs erfolgen. Hierzu können beispielsweise an dem Fahrzeug mehrere Sensoren als Erfassungseinheiten angeordnet werden.

Ein weiterer Aspekt betrifft ein Verfahren zum Betreiben eines Fahrzeugführungssystems eines Fahrzeugs, wobei Bewegungen des Fahrzeugs mit einem Verfahren nach dem vorherigen Aspekt oder einer vorteilhaften Weiterbildung davon bewertet werden, wobei abhängig von dem bereitgestellten Beurteilungsergebnis zumindest ein Trajektorien-Abschnitt der Trajektorie in der zur Rangierrichtung inversen Rangierrichtung mit dem Fahrzeug autonom durch das Fahrzeugführungssystem geführt durchfahren wird. Somit können die Ausführungen bezüglich des vorherigen Aspekts vorteilhaft für das soeben geschilderte Verfahren verwendet werden. Somit kann insbesondere das Fahrzeugführungssystem besonders effizient betrieben werden.

Das Beurteilungsergebnis kann also beispielsweise dem elektronischen Fahrzeugführungssystem über kommunikative Verbindungen bereitgestellt beziehungsweise übermittelt werden. Dementsprechend kann das elektronische Fahrzeugführungssystem, je nachdem, welche Entscheidung anhand des Beurteilungsergebnisses getroffen wurde, einen autonomen Fahrmodus aktivieren oder nicht. Dabei können beispielsweise noch Zwischenstufen, wie zumindest teilautonome Zustände, vorgenommen werden.

Insbesondere kann der Rangiervorgang durch den Nutzer des Fahrzeugs als Einparkvorgang in eine Parklücke manuell durchgeführt worden sein. Somit wurde als Rangierrichtung eine Vorwärtsfahrt in eine Parklücke vorgenommen. Mit dem Fahrzeugführungssystem kann anschließend nach dem Rangiervorgang bezüglich des Einparkvorgangs ein zeitlich autonomer Ausparkvorgang als inverser Rangiervorgang in einer inversen Rangierrichtung vorgenommen werden. Somit ist als die inverse Rangierrichtung eine Ausparkrichtung, insbesondere eine rückwärtige Ausparkrichtung aus einem Parkplatz zu verstehen. Dies erfolgt mit Hilfe des Fahrzeugführungssystems insbesondere vollautonom.

In einem Ausführungsbeispiel des vorhin genannten weiteren Aspekts kann vorgesehen sein, dass bei einem autonomen Durchfahren des zumindest einen Trajektorien-Abschnitts in der zur Rangierrichtung inversen Rangierrichtung ein Umgebungsbereich des Fahrzeugs mit zumindest einer Erfassungseinheit erfasst wird, wobei durch das Fahrzeugführungssystem der erfasste Umgebungsbereich dahingehend beurteilt wird, ob sich zumindest ein potentielles Kollisionsobjekt in dem Umgebungsbereich befindet, und das zumindest eine potentielle Kollisionsobjekt beim autonomen Durchfahren berücksichtigt wird. Mit anderen Worten ausgedrückt kann es beispielsweise vorkommen, dass potenzielle Kollisionsobjekte beim manuellen Durchführen der Trajektorie bei dem Rangiervorgang im Umgebungsbereich vorhanden waren und diese beispielsweise bei dem autonomen inversen Rangiervorgang nicht mehr vorhanden sind. Somit stellen die vorhin detektierten beziehungsweise erfassten Kollisionsobjekte bei dem autonomen Durchfahren des zumindest einen Trajektorien-Abschnitts keine Gefahr mehre dar. Anderenfalls kann wiederum festgestellt werden, dass die potenziellen Kollisionsobjekte weiterhin noch in dem Umgebungsbereich vorhanden sind und diese bei dem autonomen Durchfahren besonders berücksichtigt werden sollen, so dass es zu keinen Kollisionen mit diesen Kollisionsobjekten kommen kann. Beispielsweise kann es sich bei dem Kollisionsobjekt um ein weiteres Fahrzeug, einen Verkehrsteilnehmer, einen Baum, eine Leitplanke, einen Begrenzungspfosten, eine Parkplatzbegrenzung, eine Säule, einen hohen Randstein, eine Straßenbegrenzung oder um eine andere Fahrspur handeln. Somit kann beispielsweise systemseitig überprüft werden, ob vorher vorhandene Hindernisse beziehungsweise Kollisionsobjekte noch vorhanden sind oder nicht. Auf jeden Fall werden diese systemseitig beim Erfassen von potenziellen Kollisionsobjekten für das autonome Durchfahren berücksichtigt. Dabei kann der Umgebungsbereich bei dem Rangiervorgang und bei dem inversen Rangiervorgang kontinuierlich überwacht beziehungsweise beobachtet werden. Somit können Kollisionen zwischen dem Fahrzeug und einem potenziellen Kollisionsobjekt verhindert beziehungsweise vorgebeugt werden.

Beispielsweise kann es sich bei der einen Erfassungseinheit um eine Umfeldsensorik beziehungsweise ein Umfeldsensorsystem des Fahrzeugs handeln.

In einem weiteren Ausführungsbeispiel des weiteren Aspekts ist vorgesehen, dass durch das Fahrzeugführungssystem beziehungsweise durch die Auswerteeinheit überprüft wird, ob sich das zumindest eine potentielle Kollisionsobjekt zumindest bereichsweise entlang des zumindest einen Trajektorien-Abschnitts befindet, und falls ja, das autonome Durchfahren beendet wird. Sollte insbesondere bereits beim gestarteten autonomen Durchfahren festgestellt werden, dass eine Kollision mit dem potenziellen Kollisionsobjekt unmittelbar bevorsteht und eine Gefahr besteht, kann insbesondere sofort das autonome Durchfahren beendet und der Nutzer darüber informiert werden. Insbesondere ist es dann von Bedeutung, wenn das potenzielle Kollisionsobjekt sich entweder bereichsweise entlang des zumindest einen Trajektorien-Abschnitts befindet oder sich innerhalb des Trajektorien-Abschnitts befindet. Sollte dies der Fall sein, kann systemseitig ein Beenden des autonomen Durchfahrens vorgenommen werden, so dass es zu keinen Gefahren kommen kann. Dabei kann insbesondere zusätzlich überprüft werden, ob sich beispielsweise das Kollisionsobjekt selbst entlang der Trajektorie bewegt und ob sich beispielsweise durch eine Geschwindigkeitsverringerung beziehungsweise eine Abbremsung ausgehend von dem Kollisionsobjekt eine potenzielle Gefahr verhindern lässt. In diesem Fall kann wiederum das autonome Durchfahren in einer anderen Art und Weise weitergeführt werden.

Ein weiterer Aspekt der Erfindung betrifft ein elektronisches Fahrzeugführungssystem mit einer Auswerteeinheit, wobei das Fahrzeugführungssystem zum Durchführen eines Verfahrens nach einem der vorhergehenden Aspekte oder einer vorteilhaften Weiterbildung davon ausgebildet ist. Somit kann mit Hilfe des elektronischen Fahrzeugführungssystems ein Verfahren nach einem der vorhergehenden Aspekte ausgeführt werden.

Insbesondere kann es sich bei dem elektronischen Fahrzeugführungssystem um ein elektronisches Hilfssystem des Fahrzeugs handeln. Insbesondere kann mit Hilfe des elektronischen Fahrzeugführungssystems das Fahrzeug zumindest teilautonom, insbesondere vollautonom, gesteuert beziehungsweise betrieben beziehungsweise bewegt werden. Insbesondere handelt es sich bei dem elektronischen Fahrzeugführungssystem um einen Reversing Assistant.

Unter einem elektronischen Fahrzeugführungssystem kann ein elektronisches System verstanden werden, das dazu eingerichtet ist, ein Fahrzeug vollautomatisch oder vollautonom zu führen, insbesondere wo kein Eingreifen in eine Steuerung durch einen Fahrer erforderlich ist. Das Fahrzeug führt alle erforderlichen Funktionen, wie Lenkung, Brems- und/oder Beschleunigungsmanöver, die Beobachtung und Erfassung des Straßenverkehrs sowie entsprechende Reaktionen, automatisch durch. Insbesondere kann das elektronische Fahrzeugführungssystem einen vollautomatischen oder vollautonomen Fahrmodus des Kraftfahrzeugs nach Stufe 5 der Klassifizierung gemäß SAE J3016 implementieren. Unter einem elektronischen Fahrzeugführungssystem kann ein Fahrerassistenzsystem verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß SAE J3016-Klassifizierung implementieren.

Die wenigstens teilweise automatische Fahrzeugführung kann es daher beinhalten, das Fahrzeug gemäß einem vollautomatischen oder vollautonomen Fahrmodus der Stufe 5 zu führen. Die wenigstens teilweise automatische Fahrzeugführung kann auch beinhalten, das Fahrzeug gemäß einem teilweise automatisierten oder teilautonomen Fahrmodus nach den Stufen 1 bis 4 zu führen.

Ein weiterer Aspekt der Erfindung betrifft ein Fahrzeug mit einem Fahrzeugführungssystem nach dem vorherigen Aspekt.

Insbesondere kann es sich bei dem Fahrzeug um ein hochautomatisiertes Fahrzeug handeln. Insbesondere kann es sich bei dem Fahrzeug um ein zumindest teilautonom, speziell vollautonom, betreibbares Fahrzeug handeln. Insbesondere handelt es sich bei dem Fahrzeug um einen Personenkraftwagen, einen Lastkraftwagen oder Kraftwagen.

Insbesondere kann das Fahrzeug einen Anhänger aufweisen, so dass es sich bei dem Fahrzeug beispielsweise um ein Fahrzeug-Anhänger-Gespann handeln kann.

Vorteilhafte Ausführungsbeispiel beziehungsweise Ausführungsformen eines Aspekts der Erfindung sind als vorteilhafte Ausführungsbeispiele der anderen Aspekte anzusehen. Dies gilt in umgekehrter Art und Weise auch.

Weitere Ausführungsformen des erfindungsgemäßen elektronischen Fahrzeugführungssystems und des erfindungsgemäßen Fahrzeugs folgen unmittelbar aus den verschiedenen Ausgestaltungen der erfindungsgemäßen Verfahren und umgekehrt. Insbesondere lassen sich einzelne Merkmale und entsprechende Erläuterungen bezüglich der verschiedenen Ausführungsformen zu den erfindungsgemäßen Verfahren analog auf entsprechende Ausführungsformen des erfindungsgemäßen elektronischen Fahrzeugführungssystems und des Fahrzeugs übertragen. Insbesondere sind das erfindungsgemäße elektronische Fahrzeugführungssystem und das erfindungsgemäße Fahrzeug zum Durchführen eines der erfindungsgemäßen Verfahren ausgebildet oder programmiert. Insbesondere führt das erfindungsgemäße elektronische Fahrzeugführungssystem oder das Fahrzeug das erfindungsgemäße Verfahren durch.

Zu der Erfindung gehören auch Weiterbildungen des erfindungsgemäßen elektronischen Fahrzeugführungssystems und des erfindungsgemäßen Fahrzeugs, die Merkmale aufweisen, wie sie bereits im Zusammenhang mit den Weiterbildungen der erfindungsgemäßen Verfahren beschrieben worden sind. Aus diesem Grund sind die entsprechenden Weiterbildungen des erfindungsgemäßen elektronischen Fahrzeugführungssystems und des erfindungsgemäßen Fahrzeugs hier nicht noch einmal beschrieben.

Die Erfindung umfasst auch die Kombinationen der Merkmale der beschriebenen Ausführungsformen. Der Gegenstand der Erfindung wird jedoch weiterhin durch die beigefügten Ansprüche definiert.

Im Folgenden werden Ausführungsbeispiele der Erfindung beschrieben. Hierzu zeigt:
Fig. 1 eine schematische Darstellung eines Fahrzeugs, welches ein elektronisches Fahrzeugführungssystem aufweist, bei Durchfahren einer Trajektorie; und
Fig. 2 eine weitere schematische Darstellung eines Fahrzeugs mit einem Anhänger, welches ein elektronisches Fahrzeugführungssystem aufweist, bei Durchfahren einer Trajektorie.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

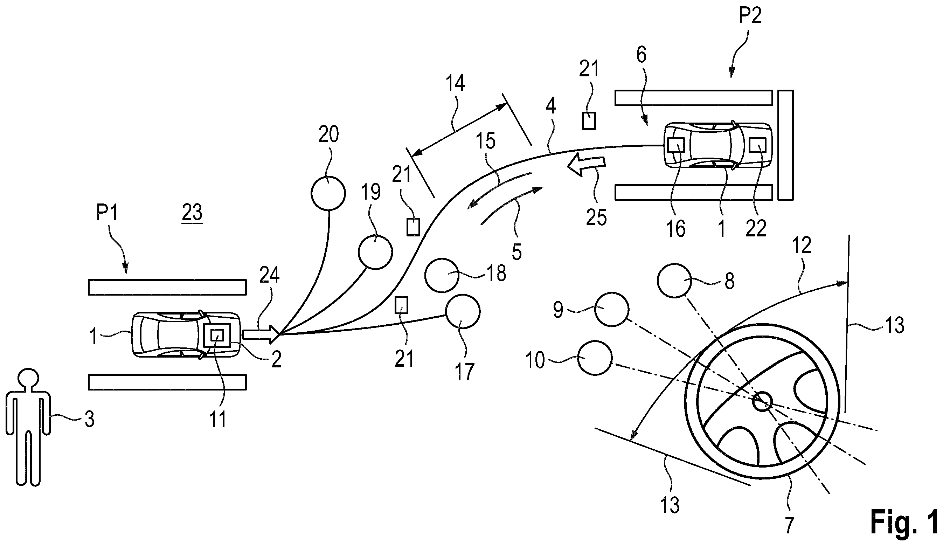

Die Fig. 1 zeigt beispielsweise ein Fahrzeug 1, welches beispielsweise ein elektronisches Fahrzeugführungssystem 2 aufweist. Mithilfe des Fahrzeugführungssystems 2 kann beispielsweise das Fahrzeug 1 zumindest teilautonom, insbesondere vollautonom, betrieben werden bei Bedarf.

Beispielsweise kann sich aktuell das Fahrzeug 1 an einer ersten Position P1 befinden. Ausgehend von dieser Position P1 kann beispielsweise das Fahrzeug 1 durch einen Nutzer 3 des Fahrzeugs 1 bewegt werden. Bei dem Nutzer 3 handelt es sich insbesondere um einen Fahrzeugführer beziehungsweise einen Fahrer des Fahrzeugs 1. Dabei kann das Fahrzeug 1 entlang einer Trajektorie 4 beziehungsweise eines Bewegungspfads beziehungsweise eines Streckenverlaufs bei einem Rangiervorgang 5 manuell bewegt beziehungsweise gesteuert werden. Beispielsweise handelt es sich bei dem Rangiervorgang 5 um einen Einparkvorgang in Vorwärtsrichtung des Fahrzeugs 1 in eine Parklücke beziehungsweise in einen Parkbereich. Dieser Parkbereich kann hier wiederum als zweite Position P2 bezeichnet werden. Somit wird ein manueller Rangiervorgang beziehungsweise Einparkvorgang in eine Parklücke beziehungsweise einen Parkplatz 6 durchgeführt. Dabei kann die Trajektorie 4 durch manuelles Betätigen eines Lenkelements 7 des Fahrzeugs 1 durch den Nutzer 3 durchgeführt werden. Bei dem Lenkelement 7 handelt es sich insbesondere um ein Lenkrad des Fahrzeugs 1.

Somit erfolgt hier zunächst ein manueller Einparkvorgang in die Parklücke 6. Mithilfe des Fahrzeugführungssystems 2 kann beispielsweise ein nachfolgender Ausparkvorgang autonom durchgeführt werden. Somit erfolgt hier die Verwendung eines "Reversing Assistenten". Hierzu kann während des Befahrens der Trajektorie 4 bei dem Rangiervorgang 5 kontinuierlich und insbesondere automatisch Stellungen des Lenkelements 7 erfasst beziehungsweise aufgezeichnet beziehungsweise ermittelt werden. Beispielsweise kann es sich bei den Stellungen 8 bis 10 um einen Lenkradwinkel, Einschlagwinkel, Einschlagzustand oder Betätigungsstellung des Lenkelements 7 und insbesondere des Lenkrads handeln. Diese erfassten Stellungen 8 bis 10 können beispielsweise einer Auswerteeinheit 11 beziehungsweise einer elektronischen Auswerteeinheit oder Recheneinheit bereitgestellt werden. Die Auswerteeinheit 11 kann beispielsweise Bestandteil des elektronischen Fahrzeugführungssystems 2 sein. Ebenso denkbar ist, dass es sich bei der Auswerteeinheit 11 um eine zum Fahrzeugführungssystem 2 und/oder zum Fahrzeug 1 separate Einheit handelt.

Mithilfe der Auswerteeinheit 11 können die Stellungen 8 bis 10 mit zumindest einer vorgegebenen Referenz-Stellung 12 beziehungsweise mit einer Referenzinformation beziehungsweise einer Vergleichsinformation verglichen beziehungsweise analysiert werden. Bei der Referenz-Stellung 12 kann es sich insbesondere um einen Wertebereich beziehungsweise ein Intervall beziehungsweise einen Intervallbereich handeln. Dies ist insbesondere dadurch von Bedeutung, da ein Lenkrad beispielsweise entweder nach links oder nach rechts gelenkt werden kann. Somit kann hier jeweils ein positiver oder negativer Winkelbereich beispielsweise vorgegeben werden. Dabei wird die Referenz-Stellung 12 in Abhängigkeit von zumindest einer Systemeigenschaft des Fahrzeugführungssystems 2 bestimmt, insbesondere beeinflusst. Dies liegt darin, da das Fahrzeugführungssystem 2 systemseitige Grenzen wir Regelgrenzen, Steuerungsgrenzen, Regelungseigenschaften, unterliegt. Diese müssen entsprechend berücksichtigt werden, sodass es bei dem manuellen Bewegen des Fahrzeugs 1 entlang der Trajektorie 4 nicht zu Situationen beziehungsweise Zuständen kommt, welche durch das Fahrzeugführungssystem 2 später nicht mehr autonom entsprechend durchgeführt werden können. Somit muss darauf geachtet werden, dass die betätigten Stellungen durch den Nutzer nicht solche Stellungen sind, welche die Systemgrenzen des Fahrzeugführungssystems 2 übersteigen.

Dementsprechend kann die Referenz-Stellung 12 derart festgelegt sein, dass sie in einem Bereich 13 liegt. Mit dem Bereich 13 ist beispielsweise festgelegt, dass hier ein Bereich zwischen einer mechanischen Grenz-Stellung des Lenkelements 7 bezüglich eines manuellen Betätigen des Lenkelements 7 und einer systemseitigen Grenz-Stellung bezüglich eines autonomen Betätigens des Lenkelements 7 durch das Fahrzeugführungssystem 2 liegt. Somit kann erreicht werden, dass während des Durchfahrens der Trajektorie 4 durch den Nutzer 3 mit dem Fahrzeug 1 es zu beispielsweise zu keinen Situationen kommt, bei welchen bei einem späteren autonomen Betrieb das Fahrzeugführungssystem 2 überfordert und insbesondere überlastet ist. Dies gilt es zu verhindern.

Hierzu wird der Vergleich zwischen den Stellungen 8 bis 10 mit der Referenz-Stellung 12 systemseitig vorgenommen. Dabei wird zumindest ein Übersteigungs-Ereignis beziehungsweise Übersteigungs-Ergebnis durch die Auswerteeinheit 11 bestimmt. Hierbei wird mithilfe der Auswerteeinheit 11 verglichen, ob eine Stellung 8 bis 10 größer oder gleich der Referenz-Stellung 12 ist. Mit anderen Worten ausgedrückt wird beispielsweise überprüft, ob ein aktueller Lenkradwinkel beziehungsweise Einschlagwinkel des Lenkelements 7 größer oder gleich einem vorgegebenen Referenz-Lenkradeinschlagwinkel ist. Dieses Vergleichen kann wiederum in jeder einzelnen Stellung 8 bis 10 durchgeführt werden, sodass jede erfasste Stellung während des Durchfahrens der Trajektorie 4 mit der Referenz-Stellung 12 verglichen wird. Anhand des zumindest einen Übersteigungs-Ergebnisses, bei welchem zumindest eine Stellung 8 bis 10 größer als die Referenz-Stellung 12 ist, kann ein Beurteilungsergebnis bestimmt beziehungsweise erzeugt werden. Dabei erfolgt eine Beurteilung derart, ob in Abhängigkeit von dem Beurteilungsergebnis eine potentielle Möglichkeit eines autonomen Durchfahrens zumindest eines Trajektorien-Abschnitts 14 der Trajektorie 4 in einer zur Rangierrichtung 24 inversen Rangierrichtung 15 durchgeführt werden kann durch das Fahrzeugführungssystem 2. Mit anderen Worten ausgedrückt wird dabei überprüft, ob nach dem manuellen Einparken in die Parklücke 6 das Fahrzeugführungssystem 2 den Ausparkvorgang autonom durchführen kann, ohne dass es zu Gefahren oder kritischen Situationen kommt.

Dabei kann zum einen beurteilt werden, ob die gesamte Trajektorie 4 wiederum invers autonom zurückgefahren werden kann oder ob zumindest innerhalb des zumindest einen Trajektorien-Abschnitts 14 ein autonomes Befahren möglich ist. Ebenfalls können weitere Abschnitte der Trajektorie 4 beurteilt werden. Das bereitgestellte Beurteilungsergebnis kann beispielsweise von der Auswerteeinheit 11 über kommunikationstechnische Verbindungen beziehungsweise Möglichkeiten dem Fahrzeugführungssystem 2 bereitgestellt werden. Beispielsweise kann mithilfe des bereitgestellten Beurteilungsergebnisses der zumindest eine Trajektorien-Abschnitt 15 und/oder die Trajektorie 4 in der zur Rangierrichtung 24 inversen beziehungsweise entgegengesetzten Rangierrichtung 15 autonom mittels des Fahrzeugführungssystems 2 durchfahren werden. Folglich kann unter Berücksichtigung des Beurteilungsergebnisses ein autonomer Ausparkvorgang, insbesondere in Rückwärtsrichtung, durchgeführt werden. Somit kann für den Nutzer 2 das Ausparken erleichtert werden.

Um bereits während des Rangiervorgangs 5 den Nutzer 3 derart anzulernen beziehungsweise zu unterstützen, sodass das Fahrzeugführungssystem 2 den nachfolgenden beziehungsweise späteren Ausparkvorgang als inverser Rangiervorgang 25 durchführen kann, kann eine permanente Überprüfung der Stellungen 8 bis 12 hinsichtlich der Referenz-Stellung 12 durchgeführt werden. Dabei kann insbesondere in Abhängigkeit von dem Beurteilungsergebnis zumindest ein Warnhinweis generiert werden, wobei dieser in dem Fahrzeug 1, beispielsweise mittels einer Ausgabeeinheit 16, akustisch, optisch und/oder haptisch ausgegeben werden kann. Hierzu kann beispielsweise der Nutzer 3 darüber informiert werden, dass in Abhängigkeit von der aktuellen Betätigung des Lenkelements 7 eine kritische Stellung erreicht werden kann. Dies hätte beispielsweise Auswirkungen beim Befahren der Trajektorie 4. Je nach Lenkwinkel beziehungsweise Einschlagwinkel des Lenkelements 7 kann hierzu eine Abweichung 17 bis 20 gegenüber der Trajektorie 4 auftreten, sodass der Nutzer 3 eventuell von der Straße oder von einer Kurve oder einer Abbiegung zu weit entfernt einlenkt. Diese wiederum kann mithilfe des Warnhinweises korrigiert werden, sodass der Nutzer 3 einen Eingriff in das Lenkverhalten des Fahrzeugs 1 vornehmen kann. Hierzu kann des Weiteren in Abhängigkeit von einem Wert des Übersteigungs-Ergebnisses beziehungsweise von einer Gefahrenstufe beziehungsweise von einem kritischen Level hinsichtlich der vorgenommenen Stellungen 8 bis 10 weitere Warnhinweise generiert werden und die Warnhinweise in einer kaskadierten Reihenfolge ausgegeben werden. Somit kann je nach aktuellem Gefahrenpotential beziehungsweise Priorität der Stellungen 8 bis 10 insbesondere im Vergleich zu der Referenz-Stellung 12 verschiedene Warnhinweise und/oder Hinweise und/oder Warnsignale dem Nutzer 3 ausgegeben werden, sodass dieser bereits im Vorfeld vor einer dem Fahrzeugführungssystem 2 kritischen Systemgrenze annähernden Bereich gefahren wird. Folglich können frühzeitig Gegenmaßnahmen, insbesondere Gegenlenkmaßnahmen, durch den Nutzer 3 vorgenommen werden, sodass die Stellungen des Lenkelements 7 und insbesondere des Lenkrads innerhalb der Referenz-Stellung 12 nicht gefährlich überschreiten. Somit kann wiederum mithilfe der Warnhinweise dem Nutzer 3 Handlungsempfehlungen und/oder Anweisungen und/oder Lenktipps zur Verfügung gestellt und somit ausgegeben werden. Mit diesen kann der Nutzer 3 ein Anpassen beziehungsweise Korrigieren beziehungsweise Verändern des Betätigen des Lenkelements 7 und somit der Stellungen 8 bis 10 vornehmen. Dies kann wiederum mithilfe der Warnhinweise dem Nutzer 3 vorgeschlagen werden. Sollte der Nutzer 3 diese nicht berücksichtigen, so kann es im Worst-Case dazu führen, dass ein autonomes Durchfahren in inverser Richtung 15 durch das Fahrzeugführungssystem 2 nicht durchgeführt werden kann. Insbesondere kann beispielsweise in Abhängigkeit von dem Beurteilungsergebnis dem Nutzer 3 Vorschläge gebracht werden, sodass die Stellungen 8 bis 10 des Lenkelements 7 so verändert werden können, dass diese kleiner oder gleich der Referenz-Stellung 12 sind. Dies ist vorteilhaft für einen autonomen späteren Betrieb des Fahrzeugs 1.

Eine weitere Möglichkeit neben der akustischen und/oder optischen Warnung des Nutzers 3 vor einer kritischen Stellung 8 bis 10 kann eine haptische Rückmeldung am Betätigungselement 7 sein. Dabei kann beispielsweise abhängig von dem zumindest einen Übersteigungs-Ergebnis eine Lenkeigenschaft des Lenkelements 7 für das manuelle Betätigen angepasst werden. Beispielsweise kann hier beim Erreichen einer kritischen Stellung ein haptischer Impuls beziehungsweise eine haptische Rückmeldung über das Betätigungselement 7, welches durch zumindest eine Hand des Nutzers 3 umgriffen ist, ausgegeben werden. Somit erfährt der Nutzer 3 über eine haptische Rückmeldung, dass hier nun ein kritischer Lenkradeinschlag beziehungsweise Lenkradwinkel vorliegt und er entsprechend gegensteuern beziehungsweise etwas entgegen beziehungsweise zurücklenken sollte.

Des Weiteren wird mithilfe der Auswerteeinheit 11 eine jeweilige Differenz zwischen den erfassten Stellungen 8 bis 10 und der systemseitigen Grenz-Stellung bezüglich eines autonomen Betätigen des Lenkelements 7 ermittelt beziehungsweise bestimmt. Somit kann beispielsweise festgestellt werden, wie weit die jeweilige Stellung von der Grenz-Stellung abweicht. Sollte die Differenz einen kritischen Wert einnehmen, insbesondere sollte sich die Differenz 0 annähern, so kann dies bei Bestimmung des Beurteilungsergebnisses berücksichtigt werden und entsprechend für das Entscheiden eines autonomen Fahrmodus verwendet werden.

Insbesondere wird die ermittelte Differenz beispielsweise dem Fahrzeugführungssystem 2 bereitgestellt beziehungsweise übermittelt. Somit stellt das Fahrzeugführungssystem 2 selbst fest, wenn die Differenz einen ersten vorgegebenen Schwellwert überschreitet. In diesem Fall wird ein erster Sicherheitsmechanismus aus einer Anzahl von mehreren Sicherheitsmechanismen des Fahrzeugführungssystems 2 aktiviert. In diesem ersten Sicherheitsmechanismus ist nur ein eingeschränktes beziehungsweise bedingtes autonomes Durchfahren durch das Fahrzeugführungssystem 2 möglich. Sollte wiederum festgestellt werden, dass die Differenz einen zweiten vorgegebenen Schwellwert überschreitet, so wird ein zum ersten Sicherheitsmechanismus unterschiedlicher zweiter Sicherheitsmechanismus des Fahrzeugführungssystems 2 aktiviert. In diesem zweiten Sicherheitsmechanismus wird systemseitig ein autonomes Befahren und somit ein autonomer Betrieb des Fahrzeugs 1 unterbunden beziehungsweise gesperrt beziehungsweise verboten. Dies kann solange vorliegen, bis systemseitig wiederum festgestellt wird, dass nun ein sicherer Modus für das Fahrzeugführungssystem 2 vorliegt.

Des Weiteren kann beispielsweise systemseitig festgestellt werden, wenn zumindest eine der erfassten Stellungen 8 bis 10 der systemseitigen Grenz-Stellung entspricht oder diese übersteigt. Sollte dies festgestellt werden, sodass durch den Nutzer 3 Betätigungen mit dem Lenkelement 7 vorgenommen werden, welche durch das Fahrzeugführungssystem 2 systemseitig nicht nachgestellt beziehungsweise nachgebildet werden können für das autonome Fahren, so kann zum einen das Erfassen der Stellungen 8 bis 10 beim Befahren der Trajektorie 4 und/oder ein vollständiges Erfassen der Trajektorie 4 an sich beim Durchfahren der Trajektorie 4 abgebrochen werden. Somit steht in diesem Fall ein autonomes Ausparken nicht zur Verfügung.

Damit insbesondere die Beurteilung, ob ein autonomes Durchfahren in inverser Richtung 15 möglich ist, besser durchgeführt werden kann, können zusätzliche Informationen erfasst beziehungsweise bereitgestellt werden. Hierbei kann beispielsweise während des Durchfahrens der Trajektorie 4 eine Umgebung 23 des Fahrzeugs 1 permanent mit zumindest einer Erfassungseinheit 22 erfasst werden. Bei der Erfassungseinheit 22 kann es sich beispielsweise um ein Umfelderfassungssystem des Fahrzeugs 1 oder um mehrere verteilt am Fahrzeug 1 angeordnete Sensoren handeln. Dabei kann mittels der Erfassung zumindest eine Umgebungsinformation betreffend die Umgebung 23 der Auswerteeinheit 11 und insbesondere dem Fahrzeugführungssystem 2 zur Verfügung gestellt werden. Dies kann vor allem zusätzlich bei der Bestimmung des Beurteilungsergebnisses berücksichtigt werden, da hier vielleicht gefährliche Kurven, Straßenverläufe, Verkehrssituationen eine Rolle spielen können.

Beispielsweise kann bei dem Erfassen der Umgebung 23 bei dem Rangiervorgang 5 und auch während des inversen Rangiervorgangs in der ersten Rangierrichtung 15, also beim Ausparken, die Umgebung und insbesondere ein Umgebungsbereich des Fahrzeugs 1 dahingehend beurteilt beziehungsweise überprüft werden, ob in der Umgebung 23 sich zumindest ein potentielles Kollisionsobjekt 21 befindet. Sollte dies der Fall sein, so ist dies für das autonome Durchfahren zu berücksichtigen. Bei einem solchen Kollisionsobjekt 21 kann es sich beispielsweise um Straßenbegrenzungen, andere Verkehrsteilnehmer, Litfaßsäulen oder anderweitige gefährliche Objekte im Bereich der Trajektorie 4 handeln. Dabei wird vor allem systemseitig überprüft, ob sich ein solches Kollisionsobjekt 21 bereichsweise entlang der Trajektorie 4 oder des Trajektorien-Abschnitts 14 befindet. Insbesondere wird dabei überprüft, ob sich ein Kollisionsobjekt 21 auf der Trajektorie 4 oder beispielsweise daneben, also neben einer Straße, befindet. Sollte während oder im Vorfeld des geplanten autonomen Durchfahrens festgestellt werden, dass eine Kollision mit einem Kollisionsobjekt 21 wahrscheinlich ist, so kann das autonome Durchfahren entweder gar nicht gestartet beziehungsweise freigegeben werden oder, falls es schon begonnen hat, sofort beendet werden. Insbesondere kann durch das Erfassen der Trajektorie 4 beim manuellen Durchfahren eine Referenz-Trajektorie beziehungsweise Trainings-Trajektorie erzeugt und generiert werden, welche für ein maschinelles Trainieren des Fahrzeugführungssystems 2 beispielsweise für autonome Ausparkvorgänge verwendet werden kann. Eine weitere Möglichkeit ist, dass die erfassten Stellungen, Trajektorien und insbesondere das bestimmte Beurteilungsergebnis mit weiteren Fahrzeugen, insbesondere einer Fahrzeugflotte, geteilt werden, sodass diese weiteren Fahrzeuge ebenfalls die Informationen für Rangiervorgänge und insbesondere inverse Rangiervorgänge verwenden können.

Beispielsweise können die Informationen hinsichtlich des gezeigten Ausführungsbeispiels in der Fig. 1 bezüglich des Rangiervorgangs 5 von der Position P1 zu der Position P2, also manuell, und wiederum von der Position P2 zu der Position P1, welche autonom durchgeführt wird, in einer digitalen Karte gespeichert werden, sodass Fahrzeuge, welche einen ähnlichen Vorgang zwischen den Positionen P1 und P2 und umgekehrt vornehmen, diese Informationen als historische Informationen berücksichtigen können. Somit erfolgt beispielsweise von der Position P1 zu der Position P2 ein manueller Fahrvorgang und von der Position P2 zu der Position P1 ein autonomer Fahrvorgang.

Beispielsweise kann zwischen der mechanischen Grenz-Stellung und der systemseitigen Grenz-Stellung eine vorgegebene Differenz festgelegt werden. Beispielsweise kann hierbei, wenn es sich bei den Stellungen um Lenkradeinschlagwinkel handelt, eine Differenz zwischen der systemseitigen und der mechanischen Grenz-Stellung von 5 Grad, insbesondere 10 Grad, maximal 15 Grad handeln. Somit weist die systemseitige Grenz-Stellung einen geringeren maximalen Einschlagwinkel des Lenkrads auf.

Mit anderen Worten ausgedrückt kann mithilfe der vorliegenden Erfindung ein verbesserter Reversing-Assist für Fahrzeuge zur Verfügung gestellt werden. Dabei kann beim Anlernen der Trajektorie 4 der Fahrer beziehungsweise Nutzer 3 angeleitet werden, eine nicht zu scharfe Trajektorie, beispielsweise die Abweichungen 17 bis 20, zu fahren, sodass diese systemseitig, insbesondere autonom, wieder abgefahren werden können. Dabei kann bei dem Durchfahren der Trajektorie 4 durch den Nutzer 3 bei Überschreiten eines definierten Lenkradwinkels eine haptische Rückmeldung und/oder eine kurzzeitige Begrenzung und/oder ein kurzer Lenkimpuls und/oder ein weicher Anschlag am Lenkrad erfolgen, sodass der Nutzer 3 die Grenzen hinsichtlich des autonomen Fahrmodus spürt beziehungsweise wahrnimmt. Dabei kann beispielsweise eine Art "Gegenmoment" oder eine Gegen-Lenkmaßnahme vorgenommen werden, sodass dies beim Lenken durch den Nutzer 3 durch den Nutzer wahrgenommen werden kann.

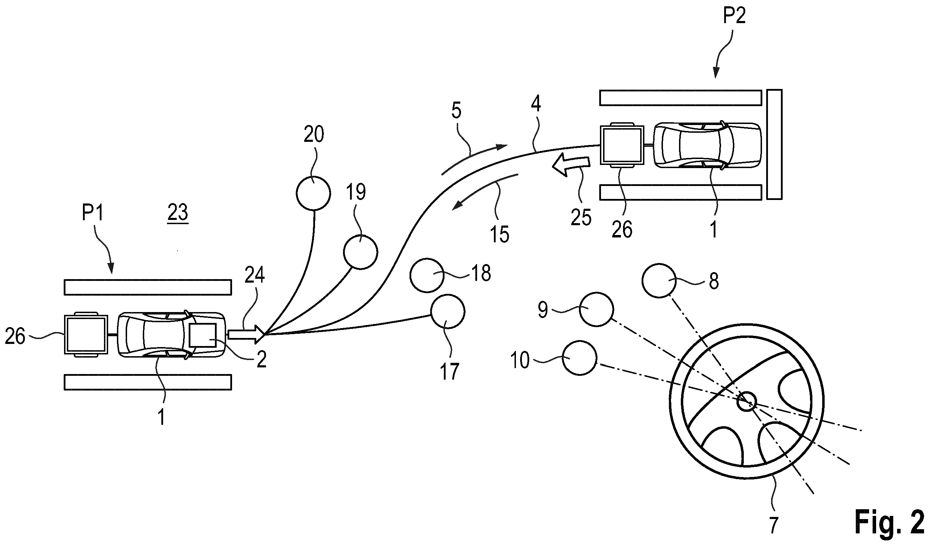

In der Fig. 2 ist hinsichtlich der Ausführungen aus Fig. 1 der Fall dargestellt, bei welchem das Fahrzeug 1 zusätzlich einen Anhänger 26 aufweist. Somit ist hier das Fahrzeug 1 als Fahrzeug-Anhänger-Gespann ausgebildet. Hierzu darf vollumfänglich auf die bereits ausgeführten Ausführungen der Fig. 1 verwiesen werden. Die dortigen Ausführungen gelten hier ebenfalls. Zusätzlich kann hier eine Art und/oder Geometrie und/oder eine Abmessung und/oder eine Beladung und/oder ein Typ des Anhängers 26 für das Beurteilen beziehungsweise das Bestimmen des Beurteilungsergebnisses berücksichtigt werden.

Beispielsweise wird nun noch in anderen Worten die vorliegende Erfindung erläutert. Beispielsweise kann der Nutzer 3 das Fahrzeug 1 steuern. Hierbei kann beispielsweise die Stellung 8 eine Neutralstellung sein. Bei Überschreiten des Lenkradwinkels hinsichtlich der Referenz-Stellung 12 erfolgt eine haptische Rückmeldung und/oder kurzzeitige Begrenzung und/oder ein Lenkimpuls am Lenkrad, sodass der Nutzer 3 die Grenze spürt und nicht weiter einlenkt. Der Hinweis kann temporär oder ein dauerhafter weicher Lenkanschlag sein, der vor dem eigentlichen mechanischen Lenkeinschlag liegt. Dadurch kann er intuitiv die Grenzen erfahren ohne dass dafür ein separates HMI erforderlich ist. Gleichzeitig kann dem Nutzer 3 eine Meldung eingeblendet werden, dass die anschließende reproduzierende Rückwärtsfahrt nicht mehr möglich ist, wenn er den Lenkanschlag überlenkt. Diese Meldung kann auch mit dem Hinweis der Rückmeldemöglichkeit für den Nutzer 3 versehen werden, dass sie verstanden wurde und nicht mehr angezeigt werden soll. Der Fahrer kann den weichen Lenkanschlag bewusst übersteuern, um enge Kurvenradien beispielsweise zu fahren. In der Konsequenz kann er aber die Regelung aus gespeicherter Trajektorie nicht nutzen, sodass ein autonomes Fahren nicht möglich ist. Das kann dem Nutzer 3 durch einfache und klare Warnhinweise signalisiert werden.

### Bezugszeichenliste

- 1: Fahrzeug
- 2: elektronisches Fahrzeugführungssystem
- 3: Nutzer
- 4: Trajektorie
- 5: Rangiervorgang
- 6: Parkplatz
- 7: Lenkelement
- 8, 9, 10: Stellungen
- 11: Auswerteeinheit
- 12: Referenz-Stellung
- 13: Bereich
- 14: Trajektorienabschnitt
- 15: inverse Rangierrichtung
- 16: Ausgabeeinheit
- 17 bis 20: Abweichungen zu der Trajektorie
- 21: Kollisionsobjekte
- 22: Erfassungseinheit
- 23: Umgebung
- 24: Rangierrichtung
- 25: inverser Rangiervorgang
- 26: Anhänger
- P1, P2: erste und zweite Position

## Patentansprüche

1. Verfahren zum Bewerten von Bewegungen eines Fahrzeugs (1) wobei folgende Schritte durchgeführt werden:
- Bewegen des Fahrzeugs (1) entlang einer Trajektorie (4) bei einem Rangiervorgang (5) des Fahrzeugs (1), wobei die Trajektorie (4) durch manuelles Betätigen eines Lenkelements (7) des Fahrzeugs (1) durch einen Nutzer (3) durchfahren wird;
- Erfassen von Stellungen (8, 9, 10) des Lenkelements (7) beim Durchfahren der Trajektorie (4);
- Vergleichen der Stellungen (8, 9, 10) mit zumindest einer vorgegebenen Referenz-Stellung (12) des Lenkelements (7) und Bestimmen zumindest eines Übersteigungs-Ergebnisses mit einer Auswerteeinheit (11), bei welchem eine Stellung (8, 9, 10) größer oder gleich der Referenz-Stellung (12) ist;
- Bestimmen eines Beurteilungsergebnisses mit der Auswerteeinheit (11) zumindest abhängig von dem zumindest einen Übersteigungs-Ergebnis, wobei mit dem Beurteilungsergebnis eine potentielle Möglichkeit eines autonomen Durchfahrens zumindest eines Trajektorien-Abschnitts (14) der Trajektorie (4) in einer zur Rangierrichtung (24) inversen Rangierrichtung (15) beurteilt wird; und
- Bereitstellen des Beurteilungsergebnisses an ein Fahrzeugführungssystem (2) des Fahrzeugs (1), wobei
- die Referenz-Stellung (12) abhängig von zumindest einer Systemeigenschaft des Fahrzeugführungssystems (2) bestimmt wird, wobei die Referenz-Stellung (12) derart bestimmt wird, dass sie in einem Bereich (13) zwischen einer mechanischen Grenz-Stellung des Lenkelements (7) bezüglich eines manuellen Betätigens des Lenkelements (7) und einer systemseitigen Grenz-Stellung bezüglich eines autonomen Betätigen des Lenkelements (7) durch das Fahrzeugführungssystem (2) liegt, und
- eine jeweilige Differenz zwischen den erfassten Stellungen (8, 9, 10) und der systemseitigen Grenz-Stellung ermittelt wird, wobei die jeweilige Differenz bei dem Bestimmen des Beurteilungsergebnisses berücksichtigt wird,
**dadurch gekennzeichnet, dass**
- dann, wenn die Differenz einen ersten vorgegebenen Schwellwert überschreitet, ein erster Sicherheitsmechanismus des Fahrzeugführungssystems (2), bei welchem ein autonomes Durchfahren des zumindest einen Trajektorien-Abschnitts (14) der Trajektorie (4) in der zur Rangierrichtung (24) inversen Rangierrichtung (15) eingeschränkt durchgeführt werden kann, aktiviert wird, und dann, wenn die Differenz einen zweiten vorgegebenen Schwellwert überschreitet, ein zweiter Sicherheitsmechanismus des Fahrzeugführungssystems (2), bei welchem ein autonomes Durchfahren des zumindest einen Trajektorien-Abschnitts (14) der Trajektorie (4) in der zur Rangierrichtung (24) inversen Rangierrichtung (15) nicht durchgeführt werden kann, aktiviert wird.

2. Verfahren nach Anspruch 1,
**dadurch gekennzeichnet, dass**
abhängig von dem bereitgestellten Beurteilungsergebnis zumindest ein Warnhinweis generiert wird, wobei der zumindest eine Warnhinweis in dem Fahrzeug (1) akustisch, optisch und/oder haptisch ausgegeben wird.

3. Verfahren nach Anspruch 2,
**dadurch gekennzeichnet, dass**
abhängig von einem Wert des Übersteigungs-Ergebnisses neben dem zumindest einen Warnhinweise weitere Warnhinweise generiert werden, wobei der zumindest eine Warnhinweis und die weiteren Warnhinweise in einer kaskadierten Reihenfolge im Fahrzeug (1) ausgegeben werden.

4. Verfahren nach Anspruch 2 oder 3,
**dadurch gekennzeichnet, dass**
dem Nutzer (3) mit dem zumindest einen Warnhinweis eine Handlungsempfehlung ausgegeben wird, mit welcher dem Nutzer (3) ein Anpassen des manuellen Betätigens des Lenkelements (7) vorgeschlagen wird, insbesondere ein Betätigen im Hinblick auf eine Veränderung der Stellung (8, 9, 10) des Lenkelements (7) kleiner oder gleich der Referenz-Stellung (12) vorgeschlagen wird.

5. Verfahren nach einem der vorhergehenden Ansprüche,
**dadurch gekennzeichnet, dass**
abhängig von dem zumindest einen Übersteigungs-Ergebnis eine Lenkeigenschaft des Lenkelements (7) für das manuelle Betätigen des Lenkelements (7) angepasst wird, wodurch der Nutzer (3) beim manuellen Betätigen des Lenkelements (7) eine haptische Rückmeldung betreffend des zumindest einen Übersteigungs-Ergebnis erfährt.

6. Verfahren nach einem der vorhergehenden Ansprüche,
**dadurch gekennzeichnet, dass**
dann, wenn zumindest eine der erfassten Stellungen (8, 9, 10) der systemseitigen Grenz-Stellung entspricht oder diese übersteigt, das Erfassen der Stellungen des Lenkelements (7) beim Durchfahren der Trajektorie (4) und/oder ein Erfassen der Trajektorie (4) beim Durchfahren der Trajektorie (4) abgebrochen wird.

7. Verfahren nach einem der vorhergehenden Ansprüche,
**dadurch gekennzeichnet, dass**
beim Durchfahren der Trajektorie (4) eine Umgebung (23) des Fahrzeugs (1) mit zumindest einer Erfassungseinheit (22) des Fahrzeugs (1) erfasst wird, wobei zumindest eine Umgebungsinformation betreffend der erfassten Umgebung (23) der Auswerteeinheit (11) bereitgestellt wird, und die zumindest eine Umgebungsinformation beim Bestimmen des Beurteilungsergebnisses berücksichtigt wird.

8. Verfahren zum Betreiben eines Fahrzeugführungssystems (2) eines Fahrzeugs (1), wobei Bewegungen des Fahrzeugs (1) mit einem Verfahren nach einem der vorhergehenden Ansprüche 1 bis 7 bewertet werden, wobei abhängig von dem bereitgestellten Beurteilungsergebnis zumindest ein Trajektorien-Abschnitt (14) der Trajektorie (4) in der zur Rangierrichtung (24) inversen Rangierrichtung (15) mit dem Fahrzeug (1) autonom durch das Fahrzeugführungssystem (2) geführt durchfahren wird.

9. Verfahren nach Anspruch 8,
**dadurch gekennzeichnet, dass**
bei einem autonomen Durchfahren des zumindest einen Trajektorien-Abschnitts (14) in der zur Rangierrichtung (24) inversen Rangierrichtung (15) ein Umgebungsbereich des Fahrzeugs (1) mit zumindest einer Erfassungseinheit (22) erfasst wird, wobei durch das Fahrzeugführungssystem (2) der erfasste Umgebungsbereich dahingehend beurteilt wird, ob sich zumindest ein potentielles Kollisionsobjekt (21) in dem Umgebungsbereich befindet, und das zumindest eine potentielle Kollisionsobjekt (21) beim autonomen Durchfahren berücksichtigt wird.

10. Verfahren nach Anspruch 9,
**dadurch gekennzeichnet, dass**
durch das Fahrzeugführungssystem (2) überprüft wird, ob sich das zumindest eine potentielle Kollisionsobjekt (21) zumindest bereichsweise entlang des zumindest einen Trajektorien-Abschnitts (14) befindet, und falls ja, das autonome Durchfahren beendet wird.

11. Elektronisches Fahrzeugführungssystem (2) mit einer Auswerteeinheit (11), **dadurch gekennzeichnet, dass** das Fahrzeugführungssystem (2) zum Durchführen eines Verfahrens nach einem der vorhergehenden Ansprüchen 1 bis 10 ausgebildet ist.

12. Fahrzeug (1) mit einem Fahrzeugführungssystem (2) nach Anspruch 11.

## Claims

1. Method for evaluating movements of a vehicle (1), the following steps being performed:
- moving the vehicle (1) along a trajectory (4) during a shunting operation (5) of the vehicle (1), the trajectory (4) being traversed by way of a user (3) manually actuating a steering element (7) of the vehicle (1);
- detecting positions (8, 9, 10) of the steering element (7) while traversing the trajectory (4);
- comparing the positions (8, 9, 10) with at least one predetermined reference position (12) of the steering element (7) and determining, using an evaluation unit (11), at least one exceedance result in which a position (8, 9, 10) is greater than or equal to the reference position (12);
- determining an assessment result using the evaluation unit (11) at least depending on the at least one exceedance result, a potential possibility of autonomously traversing at least one trajectory portion (14) of the trajectory (4) in a shunting direction (15) inverse to the shunting direction (24) being assessed on the basis of the assessment result; and
- providing the assessment result to a vehicle guidance system (2) of the vehicle (1),
- the reference position (12) being determined depending on at least one system property of the vehicle guidance system (2), the reference position (12) being determined such that it lies in a region (13) between a mechanical limit position of the steering element (7) with respect to manual actuation of the steering element (7) and a system-side limit position with respect to autonomous actuation of the steering element (7) by the vehicle guidance system (2), and
- a difference being ascertained in each case between the detected positions (8, 9, 10) and the system-side limit position, the difference in each case being taken into account when determining the assessment result,
**characterized in that**
- when the difference exceeds a first predetermined threshold, a first safety mechanism of the vehicle guidance system (2) is activated, in which autonomous traversal of the at least one trajectory portion (14) of the trajectory (4) in the shunting direction (15) inverse to the shunting direction (24) can be performed with restrictions, and when the difference exceeds a second predetermined threshold, a second safety mechanism of the vehicle guidance system (2) is activated, in which autonomous traversal of the at least one trajectory portion (14) of the trajectory (4) in the shunting direction (15) inverse to the shunting direction (24) cannot be performed.

2. Method according to claim 1,
**characterized in that**
depending on the assessment result provided, at least one warning is generated, the at least one warning being issued in the vehicle (1) acoustically, visually and/or haptically.

3. Method according to claim 2,
**characterized in that**
depending on the value of the exceedance result, further warnings are generated in addition to the at least one warning, the at least one warning and the further warnings being issued in a cascaded sequence in the vehicle (1).

4. Method according to claim 2 or 3,
**characterized in that**
using the at least one warning, a recommendation for action is issued to the user (3) with which an adjustment of the manual actuation of the steering element (7) is proposed to the user (3), with, in particular, an actuation with regard to a change in the position (8, 9, 10) of the steering element (7) to less than or equal to the reference position (12) being proposed.

5. Method according to any of the preceding claims,
**characterized in that**
depending on the at least one exceedance result, a steering property of the steering element (7) is adjusted for manual actuation of the steering element (7), as a result of which the user (3) receives haptic feedback regarding the at least one exceedance result when manually actuating the steering element (7).

6. Method according to any of the preceding claims,
**characterized in that**
when at least one of the detected positions (8, 9, 10) corresponds to or exceeds the system-side limit position, detecting the positions of the steering element (7) while traversing the trajectory (4) and/or detecting the trajectory (4) while traversing the trajectory (4) is aborted.

7. Method according to any of the preceding claims,
**characterized in that**
when traversing the trajectory (4), an environment (23) of the vehicle (1) is detected using at least one detection unit (22) of the vehicle (1), at least one item of environmental information relating to the detected environment (23) being provided to the evaluation unit (11), and the at least one item of environmental information being taken into account when determining the assessment result.

8. Method for operating a vehicle guidance system (2) of a vehicle (1), wherein movements of the vehicle (1) are evaluated using a method according to any of the preceding claims 1 to 7, wherein, depending on the provided assessment result, at least one trajectory portion (14) of the trajectory (4) is autonomously traversed by the vehicle (1), guided by the vehicle guidance system (2), in the shunting direction (15) inverse to the shunting direction (24).

9. Method according to claim 8,
**characterized in that**
during an autonomous traversal of the at least one trajectory portion (14) in the shunting direction (15) inverse to the shunting direction (24), a region surrounding the vehicle (1) is detected using at least one detection unit (22), the detected surrounding region being assessed by the vehicle guidance system (2) to determine whether at least one potential collision object (21) is located in the surrounding region, the at least one potential collision object (21) being taken into account during the autonomous traversal.

10. Method according to claim 9,
**characterized in that**
the vehicle guidance system (2) checks whether the at least one potential collision object (21) is located, at least in some regions, along the at least one trajectory portion (14), and if so, the autonomous traversal is terminated.

11. Electronic vehicle guidance system (2) having an evaluation unit (11),
**characterized in that** the vehicle guidance system (2) is configured to perform a method according to any of the preceding claims 1 to 10.

12. Vehicle (1) having a vehicle guidance system (2) according to claim 11.

## Revendications

1. Procédé d'évaluation de déplacements d'un véhicule (1), dans lequel les étapes suivantes sont réalisées :
- déplacement du véhicule (1) le long d'une trajectoire (4) lors d'une manœuvre (5) du véhicule (1), dans lequel la trajectoire (4) est parcourue par un utilisateur (3) en actionnant manuellement un élément de direction (7) du véhicule (1) ;
- détection de positions (8, 9, 10) de l'élément de direction (7) lors du parcours de la trajectoire (4) ;
- comparaison des positions (8, 9, 10) avec au moins une position de référence (12) prédéfinie de l'élément de direction (7) et détermination d'au moins un résultat de dépassement avec une unité d'évaluation (11), dans lequel une position (8, 9, 10) est supérieure ou égale à la position de référence (12) ;
- détermination d'un résultat de jugement avec l'unité d'évaluation (11) au moins en fonction de l'au moins un résultat de dépassement, dans lequel le résultat de jugement permet de juger une possibilité potentielle d'un parcours autonome d'au moins une section de trajectoire (14) de la trajectoire (4) dans une direction de manœuvre (15) inverse à la direction de manœuvre (24) ; et
- mise à disposition du résultat de jugement à un système de guidage de véhicule (2) du véhicule (1), dans lequel
- la position de référence (12) est déterminée en fonction d'au moins une caractéristique de système du système de guidage de véhicule (2), dans lequel la position de référence (12) est déterminée de telle sorte qu'elle se situe dans une zone (13) entre une position limite mécanique de l'élément de direction (7) par rapport à un actionnement manuel de l'élément de direction (7) et une position limite côté système par rapport à un actionnement autonome de l'élément de direction (7) par le système de guidage de véhicule (2), et
- une différence respective entre les positions détectées (8, 9, 10) et la position limite côté système est établie, dans lequel la différence respective est prise en compte lors de la détermination du résultat de jugement, **caractérisé en ce que**
- lorsque la différence dépasse une première valeur seuil prédéfinie, un premier mécanisme de sécurité du système de guidage de véhicule (2), dans lequel un parcours autonome de l'au moins une section de trajectoire (14) de la trajectoire (4) peut être réalisé de manière limitée dans la direction de manœuvre (15) inverse à la direction de manœuvre (24), est activé, et ensuite, lorsque la différence dépasse une seconde valeur seuil prédéfinie, un second mécanisme de sécurité du système de guidage de véhicule (2), dans lequel un parcours autonome de l'au moins une section de trajectoire (14) de la trajectoire (4) dans la direction de manœuvre (15) inverse à la direction de manœuvre (24) ne peut pas être réalisé, est activé.

2. Procédé selon la revendication 1,
**caractérisé en ce que**
en fonction du résultat de jugement mis à disposition, au moins un avertissement est généré, dans lequel l'au moins un avertissement est émis dans le véhicule (1) de manière acoustique, optique et/ou haptique.

3. Procédé selon la revendication 2,
**caractérisé en ce que**
en fonction d'une valeur du résultat de dépassement, d'autres avertissements sont générés en plus de l'au moins un avertissement, dans lequel l'au moins un avertissement et les autres avertissements sont émis dans le véhicule (1) dans un ordre en cascade.

4. Procédé selon la revendication 2 ou 3,
**caractérisé en ce que**
une recommandation d'action est émise à l'utilisateur (3) avec l'au moins un avertissement, avec laquelle il est proposé à l'utilisateur (3) d'adapter l'actionnement manuel de l'élément de direction (7), en particulier un actionnement est proposé en vue d'une modification de la position (8, 9, 10) de l'élément de direction (7) inférieure ou égale à la position de référence (12).

5. Procédé selon l'une des revendications précédentes,
**caractérisé en ce que**
en fonction de l'au moins un résultat de dépassement, une caractéristique de direction de l'élément de direction (7) est adaptée pour l'actionnement manuel de l'élément de direction (7), ce qui fait que l'utilisateur (3), lors de l'actionnement manuel de l'élément de direction (7), reçoit un retour haptique concernant l'au moins un résultat de dépassement.

6. Procédé selon l'une des revendications précédentes,
**caractérisé en ce que**
ensuite, lorsqu'au moins l'une des positions (8, 9, 10) détectées correspond à la position limite côté système ou la dépasse, la détection des positions de l'élément de direction (7) lors du parcours de la trajectoire (4) et/ou une détection de la trajectoire (4) lors du parcours de la trajectoire (4) est interrompue.

7. Procédé selon l'une des revendications précédentes,
**caractérisé en ce que**
lors du parcours de la trajectoire (4), un environnement (23) du véhicule (1) est détecté par au moins une unité de détection (22) du véhicule (1), dans lequel au moins une information d'environnement concernant l'environnement (23) détecté est mise à la disposition de l'unité d'évaluation (11), et l'au moins une information d'environnement est prise en compte lors de la détermination du résultat de jugement.

8. Procédé pour faire fonctionner un système de guidage de véhicule (2) d'un véhicule (1), dans lequel des déplacements du véhicule (1) sont évalués avec un procédé selon l'une des revendications précédentes 1 à 7, dans lequel, en fonction du résultat de jugement mis à disposition, au moins une section de trajectoire (14) de la trajectoire (4) est parcourue dans la direction de manœuvre (15) inverse à la direction de manœuvre (24) avec le véhicule (1) guidé de manière autonome par le système de guidage de véhicule (2).

9. Procédé selon la revendication 8,
**caractérisé en ce que**
lors d'un parcours autonome de l'au moins une section de trajectoire (14) dans la direction de manœuvre (15) inverse à la direction de manœuvre (24), une zone environnante du véhicule (1) est détectée avec au moins une unité de détection (22), dans lequel la zone environnante détectée est jugée par le système de guidage de véhicule (2) pour savoir si au moins un objet de collision potentiel (21) se trouve dans la zone environnante, et l'au moins un objet de collision potentiel (21) est pris en compte lors du parcours autonome.

10. Procédé selon la revendication 9,
**caractérisé en ce que**
le système de guidage de véhicule (2) vérifie si l'au moins un objet de collision potentiel (21) se trouve au moins par zones le long de l'au moins une section de trajectoire (14), et si c'est le cas, le parcours autonome est terminé.

11. Système de guidage de véhicule (2) électronique comportant une unité d'évaluation (11), **caractérisé en ce que** le système de guidage de véhicule (2) est conçu pour réaliser un procédé selon l'une des revendications précédentes 1 à 10.

12. Véhicule (1) comportant un système de guidage de véhicule (2) selon la revendication 11.
